Europäisches Patentamt

European Patent Office

Office européen des brevets

(19)

(11) **EP 0 836 188 A1**

(12) ## DEMANDE DE BREVET EUROPEEN

(43) Date de publication:
**15.04.1998 Bulletin 1998/16**

(51) Int. Cl.$^6$: **G11B 21/08**

(21) Numéro de dépôt: **97203035.7**

(22) Date de dépôt: **02.10.1997**

(84) Etats contractants désignés:
**AT BE CH DE DK ES FI FR GB GR IE IT LI LU MC NL PT SE**

(30) Priorité: **10.10.1996 FR 9612378**

(71) Demandeur:
**Philips Electronics N.V.**
**5621 BA Eindhoven (NL)**

(72) Inventeurs:
• **Boissy, Jean-Christophe**
**75008 Paris (FR)**
• **Rech, Olivier**
**75008 Paris (FR)**

(74) Mandataire: **Landousy, Christian**
**Société Civile S.P.I.D.**
**156, Boulevard Haussmann**
**75008 Paris (FR)**

(54) **Procédure pour définir un contrôleur de système dynamique et contrôleur.**

(57) Le procédé de contrôle à retours automatiques d'états concerne un système dynamique couplé à des moyens d'asservissement opérant en mode discret par contre-réaction. Le procédé comporte une phase de définition d'un contrôleur et une phase d'exploitation du système. La phase de définition est réalisée, en boucle ouverte, par un apprentissage comportant une étape de relevé d'états dans lesquels peut se trouver le système et une étape de génération de commandes lesquelles servent à ramener le système vers un état idéal. Lors de l'étape de génération de commandes, le procédé délivre, pour chaque état, une suite de commandes discrètes qui sont déterminées en imposant une contrainte destinée à réduire l'erreur relative à l'état en dessous d'un seuil prédéterminé.

Le contrôleur ainsi défini est particulièrement performant pour asservir des systèmes dynamiques non linéaires.

Application: Contrôle de l'asservissement d'un disque dur. Contrôle de l'asservissement de systèmes dynamiques de stockage de signaux ou de données.

FIG.3

EP 0 836 188 A1

**Description**

L'invention concerne un procédé de contrôle à retours automatiques d'états pour un système dynamique couplé à des moyens d'asservissement opérant en mode discret par contre-réaction, le procédé comportant une phase de définition des moyens d'asservissement et une phase d'exploitation du système, la phase de définition étant réalisée, en boucle ouverte, par un apprentissage comportant une étape de relevé d'états dans lesquels peut se trouver le système et une étape de génération de commandes lesquelles servent à corriger des erreurs mesurées entre les états et un état idéal.

L'invention concerne également un appareillage comportant un système à contrôler couplé à des moyens d'asservissement définis par le procédé. Elle concerne aussi un contrôleur défini par le procédé pour réaliser l'asservissement d'un tel appareillage.

Le système peut être un disque dur d'ordinateur ou plus généralement un système d'enregistrement et de reproduction de données ou de signaux par exemple de signaux audio ou vidéo.

Le document EP 0 598 594 décrit un contrôleur pour un système de commande de disques. Le contrôleur déplace une tête de lecture/écriture par rapport aux pistes du disque en fonction d'un profil de vitesse prédéterminé. Si le profil désiré n'est pas respecté le contrôleur délivre des commandes pour corriger les écarts observés. Ce contrôleur met en oeuvre la technique dite à logique floue pour effectuer ces corrections. Celles-ci se présentent sous la forme de règles floues qui sont stockées dans des dispositifs appropriés pour être utilisées en cours d'exploitation du système. Un tel système peut prendre différents états, un état étant défini par un vecteur d'état dans lequel interviennent différents paramètres sélectionnés d'après la nature du système ou d'après le contrôle que l'on désire effectuer. Ainsi on peut vouloir privilégier un contrôle de la vitesse de la tête de lecture/écriture comme dans le document précité ou bien opérer un contrôle de la position de la tête par rapport aux pistes du disque ou tout autre paramètre ou toute autre association de paramètres. Dans le cas d'un disque dur, si la tête de lecture n'est pas correctement positionnée sur la piste du disque ou bien on stoppe l'opération de lecture/écriture ou bien on ramène la tête vers le centre de la piste. Le problème posé consiste alors à ramener le système placé dans un état défectueux vers un état idéal pour lequel les erreurs se rapportant à chaque paramètre sont nulles ou au moins très faibles, les erreurs étant mesurées entre l'état réel du système et l'état idéal.

D'une manière générale, les systèmes à contrôler peuvent être linéaires ou non linéaires. Les contrôleurs linéaires comme les contrôleurs PID peuvent être mal adaptés à un contrôle de tels systèmes. Un contrôleur PID (proportionnel (P), intégral (I), dérivé (D)) est un contrôleur linéaire qui réalise une combinaison linéaire des termes P, I, D. Un tel contrôle linéaire constitue une approximation qui n'est pas toujours satisfaisante et conduit à des erreurs qui peuvent nuire à la précision du contrôle.

Néanmoins il existe des approches mettant en oeuvre des contrôleurs non-linéaires mais ils sont généralement très difficiles à mettre au point d'où des qualités d'asservissement souvent médiocres.

Le but de l'invention est donc d'améliorer les performances des contrôleurs des systèmes dynamiques et en particulier des systèmes dynamiques non linéaires en définissant les contrôleurs de manière à leur permettre d'être adaptés à toutes sortes de systèmes qu'ils soient linéaires ou non-linéaires.

Ce but est atteint en faisant que pour définir les moyens d'asservissement lors de l'étape de génération de commandes, le procédé délivre, pour chaque état, une suite de commandes discrètes qui sont déterminées en imposant une contrainte destinée à réduire l'erreur relative à l'état en dessous d'un seuil prédéterminé, à l'issue d'une durée prédéterminée, pour faire revenir le système au voisinage de l'état idéal.

Ainsi chaque état du système est corrigé par une suite de commandes pour le ramener vers l'état idéal. Ces commandes sont ensuite utilisées automatiquement lors de la phase d'exploitation du système. De cette manière on peut contrôler très précisément un système dynamique que ce système soit linéaire ou non linéaire. En particulier, dans le cas d'un système non linéaire, on peut rendre les erreurs d'asservissement inférieures à une limite prédéterminée.

Préférentiellement ces suites de commandes sont stockées dans un moyen de stockage, par exemple une table de lecture, de sorte qu'en phase d'exploitation, les moyens d'asservissement effectuent une lecture de la suite de commandes qui se rapporte à l'état réel du système à l'instant concerné.

Au cours de l'apprentissage les moyens d'asservissement sont définis pour que le système passe d'un état réel sélectionné vers un état idéal en imposant des contraintes temporelles aux erreurs observées sur les paramètres, erreurs qui définissent l'écart apparaissant entre l'état réel du système et l'état idéal recherché. Dans le cas de moyens pour asservir une tête de lecture/écriture d'un disque dur ces paramètres sont par exemple, la position de la tête, la vitesse de déplacement de la tête, des résonances propres au système du fait de sa construction. Un vecteur d'état sera alors de la forme: (position, vitesse, résonance 1, résonance 2). Chaque paramètre formant le vecteur aura des limites dont il faut tenir compte pour respecter les contraintes.

Différentes techniques peuvent être utilisées pour calculer les commandes, par exemple les techniques connues d'optimisation sous contrainte.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent:

Figure 1 : un schéma d'un disque dur muni d'une tête de lecture/écriture.
Figure 2 : un schéma montrant un appareillage formé d'un système dynamique couplé à des moyens d'asservissement.
Figure 3 : une représentation indiquant une surface définissant l'amplitude des commandes selon les états du système.
Figure 4 : des courbes montrant l'évolution du système à partir d'un état sélectionné sous l'action des commandes générées par les moyens d'asservissement définis selon l'invention.
Figure 5 : un exemple de représentation de neuf états d'un système.
Figure 6 : un organigramme montrant les différentes étapes de la phase d'apprentissage selon l'invention.
Figure 7 : une représentation d'ensembles flous appliqués à chaque paramètre d'un vecteur d'état.

Selon une application préférentielle, l'invention est décrite ci-après dans le cas du contrôle d'un disque dur d'un système informatique. Il ne s'agit que d'un exemple de réalisation car l'invention peut être mise en oeuvre dans d'autres applications telles que l'enregistrement et la reproduction de signaux audio ou vidéo ou plus généralement dans des applications en automatisme qui nécessitent un asservissement de systèmes dynamiques linéaires ou non-linéaires.

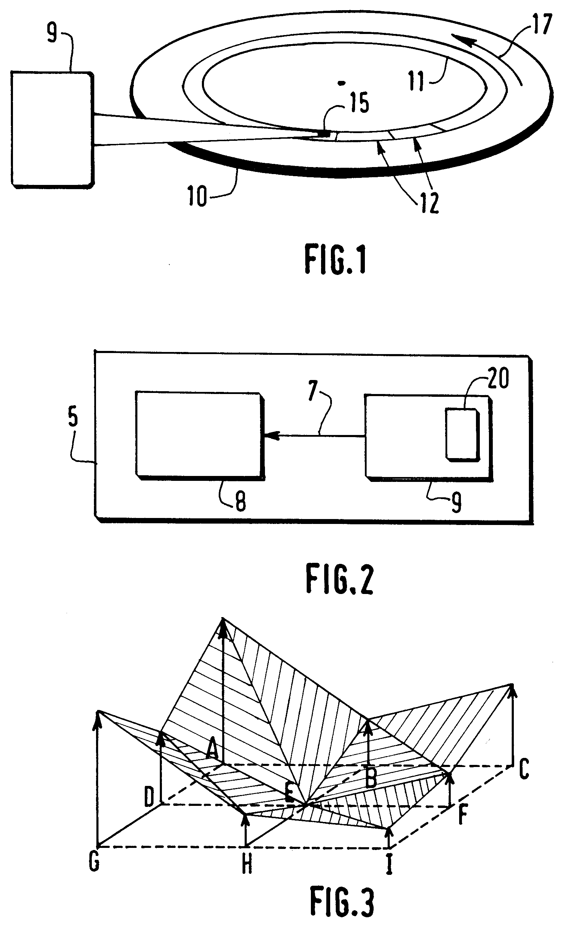

La figure 1 représente un disque 10 comportant des pistes 11 décomposées en secteurs 12 dans lesquels sont stockées des données. Une tête de lecture/écriture 15 permet de lire les données stockées sur les pistes. Le disque est mobile en rotation selon la flèche 17. En fonctionnement, la tête 15 doit rester correctement positionnée par rapport à la piste 11 pour que les données soient correctement lues ou écrites. Des moyens d'asservissement 9 permettent de contrôler les paramètres caractérisant la tête 15 pour faire que les erreurs soient les plus faibles possibles.

La figure 2 représente schématiquement un appareillage 5 formé d'un système dynamique 8 à contrôler (ici une unité de disques) et les moyens d'asservissement 9 qui délivrent des commandes 7 au système 8. Pour mettre au point l'asservissement, on peut définir un tel système par plusieurs paramètres. A titre d'exemple on peut choisir de prendre en compte:

- la position P de la tête de lecture;
- la vitesse V de déplacement de la tête de lecture;
- une première résonance R1 du système qui tient compte des particularités de construction du système à contrôler. Il s'agit par exemple de prendre en compte le temps de réaction du système à une impulsion donnée au système;

- une seconde résonance R2 du système pour un autre type de résonance.

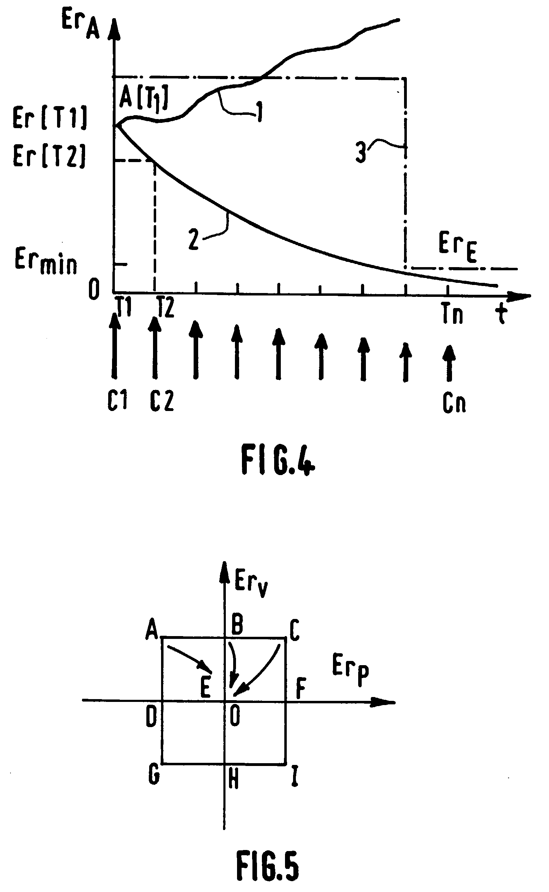

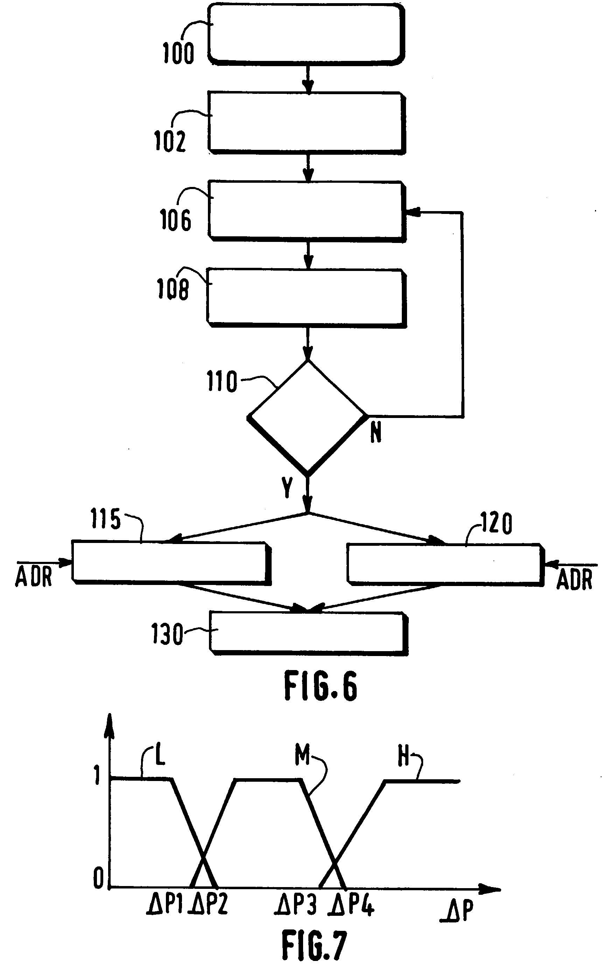

Ces quatre paramètres forment un vecteur (P, V, R1, R2). Chaque paramètre varie dans un intervalle donné. Pour la conception du contrôleur on considère un ensemble fini de vecteurs représentatifs de l'espace des états du système. On obtient ainsi une pluralité de vecteurs qui définissent différents états possibles du système à contrôler. Pour simplifier la description, on peut considérer seulement deux paramètres, la position P et la vitesse V. Supposons qu'il existe 3 valeurs représentatives pour chacun de ces paramètres. On obtient alors 9 vecteurs d'état. Il en résulte un diagramme d'états ayant l'allure représentée symboliquement sur la figure 5 pour un système à neuf états A, B, C, D, E, F, G, H, I. Sur ce diagramme, les axes représentent respectivement une erreur $Er_P$ sur la position de la tête et une erreur $Er_V$ sur la vitesse de la tête. L'apprentissage va consister à ramener le système de l'un quelconque des huit états vers l'état idéal représenté ici par l'état E correspondant à une erreur nulle. La figure 4 représente les variations d'une erreur $Er_A$ au cours du temps t pour un des paramètres formant le vecteur caractéristique d'état. Par exemple, il peut s'agir d'une erreur de positionnement de la tête 15 par rapport au centre de la piste 11. Considérons l'état A au temps $T_1$ pour lequel l'erreur $Er_A$ présente une valeur $Er[T_1]$. Si le système n'était pas asservi il évoluerait librement vers un état erroné représenté par la courbe irrégulière 1 pour laquelle les irrégularités représentent des résonances du système. Selon l'invention on désire que l'erreur $Er[T_1]$ devienne inférieure à une limite prédéterminée $Er_{min}$ au bout d'un certain temps $T_n$ c'est-à-dire $Er[T_n] = Er_E$ . Pour cela le procédé calcule une suite de commandes $C_1, C_2, C_3 \ldots C_n$ qui, appliquées à des instants consécutifs $T_1, T_2, T_3 \ldots T_n$, ramènent le système (courbe 2) dans l'état idéal représenté dans l'exemple par l'état E. Ainsi il ne s'agit pas d'une commande unique qui fait passer le système de l'état avec erreur de position vers l'état sans erreur de position mais d'une suite de commande $C_1, C_2, C_3 \ldots C_n$. La suite de commandes permet de respecter la contrainte représentée par la ligne discontinue 3. Il est ainsi possible de corriger plus finement les variations du système et par voie de conséquence de s'adapter à des systèmes dynamiques non linéaires.

Selon l'invention on génère cette suite de commandes au cours d'une phase d'apprentissage qui exploite les états propres au système à contrôler. Pour cela on définit la contrainte 3 qui limite l'erreur maximale tolérée au cours du passage de l'erreur $Er[T_1]$ vers l'erreur $Er_{min}$. A l'instant $T_1$ l'apprentissage génère une commande $C_1$ qui ramène l'erreur $Er[T_1]$ à une valeur $Er[T_2]$ et ainsi de suite pour les autres commandes. On dispose ainsi pour chaque état d'une suite de commandes $C_1, C_2, C_3 \ldots C_n$ qui permet d'asservir correctement le système dynamique à contrôler. L'apprentissage est réalisé de manière à ce que lorsque le système évolue à partir d'un état donné, en appliquant la suite de commandes relative à cet état, il se retrouve très proche de l'état idéal. De cette manière la première commande est suffisante pour ramener le système dans l'état idéal. Il est donc suffisant de stocker chaque première commande $C_1$ de chaque suite pour assurer l'asservissement du système. Cela évite la construction d'une base de suites de commandes de grande dimension et évite d'avoir des commandes différentes pour un même état. Préférentiellement on stocke toutes ces premières commandes dans une table de lecture en fin d'apprentissage. Ensuite au cours de la phase d'exploitation du système, les moyens d'asservissement adressent la table de lecture pour en extraire les commandes relatives à l'état réel du système à l'instant considéré.

La figure 6 indique l'organigramme des différentes étapes de l'apprentissage.

- étape 100 - Relevé des paramètres caractéristiques du système à contrôler.
- étape 102 - Sélection des différents états caractéristiques du système à contrôler, fixation de la résolution recherchée et des contraintes imposées aux paramètres.
- étape 106 - Pour chaque état, calcul des n commandes permettant de satisfaire aux contraintes imposées aux paramètres.
- étape 108 - stockage du couple état/commande dans un moyen de stockage (table de lecture).
- étape 110 - Lorsqu'un état a été traité, passage à l'état suivant par un retour à l'étape 106 et ceci jusqu'à ce que tous les états aient été testés.
- étape 115 - Toutes les premières commandes sont stockées dans une table de lecture pour leur exploitation ultérieure.

Les différentes étapes qui viennent d'être décrites permettent la définition des moyens d'asservissement.

Le traitement consistant à résoudre le problème de contrainte peut être effectué à l'aide d'un calculateur classique appliquant par exemple l'algorithme connu "CONSTR" d'optimisation sous contrainte du logiciel MATLAB décrit dans le document "Optimisation Toolbox User's Guide" pages 3-9 à 3-12 fournit par "The MathWorks, Inc. Natick Mass."

On stocke toutes les premières commandes déterminées comme cela vient d'être dit dans un moyen de stockage, par exemple une table de lecture 20 (figure 2). Lors de l'exploitation des résultats (étape 130), la table de lecture est adressée (étape 115, adresse ADR) par les paramètres caractérisant l'état à traiter de manière à obtenir la première commande correspondante qui est utilisée pour réaliser l'asservissement.

Pour la mise en oeuvre de la phase d'exploitation, il est possible de ne pas utiliser la table de lecture mais de lui substituer un dispositif à logique floue ou un réseau de neurones qui délivre les suites de commandes. Cette table est alors apprise par le contrôleur à logique floue ou par le réseau de neurones (étape 120). Pour cela, lorsque les suites de commandes ont été déterminées lors de la phase d'apprentissage, le procédé utilise ces suites de commandes pour effectuer un autre type d'apprentissage consistant à construire le dispositif à logique floue ou le réseau de neurones pour qu'ils soient aptes l'un ou l'autre à générer les suites de commandes à partir des états réels du système en phase d'exploitation. Ceci présente l'avantage d'éviter d'avoir à utiliser une table de lecture qui pourrait avoir une taille importante si le nombre de commandes à stocker devenait élevé.

Le nombre d'états sélectionnés pris en compte pour faire l'apprentissage est réduit en regard du nombre d'états qui peuvent être réellement pris par le système. Pour obtenir une commande applicable à un état réel il est donc généralement nécessaire d'interpoler entre les commandes stockées. En considérant l'exemple de la figure 5, on associe à chaque état sélectionné du système une commande que l'on peut représenter sous la forme du schéma de la figure 3. Les neuf états sont placés dans un même plan, les commandes associées à chaque état étant représentées perpendiculairement à ce plan. En réunissant par une droite les extrémités des lignes de commande pour les états adjacents du diagramme, on voit apparaître une surface à facettes. On conçoit aisément que dans un mode réel d'exploitation, un état réel observé peut ne pas coïncider avec un état indiqué sur le diagramme. Dans ce cas les moyens d'asservissement effectuent une interpolation par exemple linéaire entre deux états adjacents pour déterminer la commande à fournir pour corriger cet état réel observé et le ramener vers l'état idéal. Une interpolation linéaire est une technique simple et d'un usage fréquent pour résoudre ce type de difficulté. Elle peut être mise en oeuvre selon les techniques classiques.

Si l'on a choisi de ne pas utiliser une table de lecture (taille trop importante) mais un dispositif à logique floue ou un réseau de neurones, il est possible de combiner ceci avec les calculs d'interpolation linéaire ou non linéaire au moment de la définition dudit dispositif ou dudit réseau. Avec une interpolation non linéaire, les facettes du diagramme précédent peuvent devenir des surfaces courbes représentant l'évolution des commandes nécessaires à corriger tout état réel du système.

L'apprentissage d'un dispositif à logique floue peut être réalisé de la manière suivante.

La figure 7 constitue un exemple d'ensembles flous se rapportant à une variable, par exemple à une erreur de position $\Delta P$, mesurant l'écart entre la position P de la tête et le centre de la piste. On définit les ensembles flous suivants:

- ensemble L où l'erreur de position $\Delta P$ est faible lorsque $\Delta P < \Delta P_2$:
- ensemble M où l'erreur de position $\Delta P$ est moyenne

lorsque $\Delta P_1 < \Delta P < \Delta P_4$;

- ensemble H où l'erreur de position $\Delta P$ est élevée lorsque $\Delta P > \Delta P_3$.

Toutes les variables sont ainsi traduites de la même manière en ensembles flous qui sont stockés dans les moyens d'asservissement. Une valeur courante de variable pourra ainsi appartenir à un ou plusieurs ensembles flous. Des règles d'inférence sont ensuite appliquées pour effectuer le traitement souhaité et en déduire un résultat à obtenir par exemple le calcul de l'algorithme de contrainte ou la simulation de la table de lecture ou l'interpolation entre les suites de commandes,

On peut mener cette procédure d'apprentissage en appliquant l'algorithme connu "Anfis" du logiciel MATLAB décrit dans le document "Optimisation Toolbox User's Guide" pages 3-8 à 3-10 fournit par "The MathWorks, Inc. Natick Mass." Ce logiciel délivre automatiquement les règles d'inférence servant à générer les suites de commandes.

Dans le cas où l'apprentissage, pour la délivrance des suites de commandes, est réalisé à l'aide d'un réseau de neurones, il est possible d'effectuer par exemple un apprentissage supervisé. Il consiste à calculer des coefficients synaptiques pour que les résultats délivrés par le réseau de neurones soient les plus proches de résultats prévus à l'avance. On peut mener cette procédure d'apprentissage en appliquant l'algorithme connu "TrainBP" du logiciel MATLAB décrit dans le document "Optimisation Toolbox User's Guide" pages 9-99 à 9-101 fournit par "The MathWorks, Inc. Natick Mass."

## Revendications

1. Procédé de contrôle à retours automatiques d'états pour un système dynamique couplé à des moyens d' asservissement opérant en mode discret par contre-réaction, le procédé comportant une phase de définition des moyens d'asservissement et une phase d'exploitation du système, la phase de définition étant réalisée, en boucle ouverte, par un apprentissage comportant:

   - une étape de relevé d'états dans lesquels peut se trouver le système,
   - une étape de génération de commandes lesquelles servent à corriger des erreurs mesurées entre les états et un état idéal caractérisé en ce que lors de l'étape de génération de commandes, le procédé délivre, pour chaque état, une suite de commandes discrètes qui sont déterminées en imposant une contrainte destinée à réduire l'erreur relative à l'état en dessous d'un seuil prédéterminé, à l'issue d'une durée prédéterminée, pour faire revenir le système au voisinage de l'état idéal.

2. Procédé selon la revendication 1 caractérisé en ce que la suite de commandes permet d'asservir un système dynamique non linéaire.

3. Procédé selon les revendications 1 ou 2 caractérisé en ce que la suite de commandes réalise un asservissement non linéaire du système dynamique.

4. Appareillage comportant un système dynamique pouvant prendre plusieurs états, le système étant couplé à des moyens d'asservissement opérant en mode discret par contre-réaction pour réaliser des retours automatiques d'états en corrigeant des erreurs mesurées entre les états et un état idéal caractérisé en ce que les moyens d'asservissement réduisent l'erreur relative à chaque état à l'aide d'une suite de commandes discrètes pour faire revenir le système au voisinage de l'état idéal.

5. Appareillage selon la revendication 4 caractérisé en ce que la suite de commandes discrètes réalise un asservissement non linéaire du système dynamique.

6. Appareillage selon les revendications 4 ou 5 caractérisé en ce que le système dynamique est non linéaire.

7. Appareillage selon une des revendications 4 à 6 caractérisé en ce que le système est un disque dur.

8. Pour un système dynamique pouvant prendre plusieurs états, contrôleur opérant en mode discret réalisant des retours automatiques d'états en corrigeant par contre-réaction des erreurs mesurées entre les états et un état idéal caractérisé en ce qu'il réduit l'erreur relative à chaque état à l'aide d'une suite de commandes discrètes pour faire revenir le système au voisinage de l'état idéal.

9. Contrôleur selon la revendication 8 caractérisé en ce qu'il réalise un contrôle non linéaire du système dynamique.

10. Contrôleur selon une des revendications 8 ou 9 caractérisé en ce que le système dynamique est un système non linéaire.

11. Contrôleur selon une des revendications 8 à 10 caractérisé en ce que le système dynamique est un disque dur.

FIG.1

FIG.2

FIG.3

FIG.4

FIG.5

FIG.6

FIG.7

# EP 0 836 188 A1

**Office européen des brevets** | **RAPPORT DE RECHERCHE EUROPEENNE** | Numéro de la demande

EP 97 20 3035

## DOCUMENTS CONSIDERES COMME PERTINENTS

| Catégorie | Citation du document avec indication. en cas de besoin, des parties pertinentes | Revendication concernée | CLASSEMENT DE LA DEMANDE (Int.Cl.6) |
|---|---|---|---|
| X | US 5 510 939 A (LEWIS) | 4,8 | G11B21/08 |
| Y | * colonne 7, ligne 6 - colonne 14, ligne 34; figures * | 5-7,9-11 | |
| A | | 1-3 | |
| | --- | | |
| Y | PATENT ABSTRACTS OF JAPAN vol. 14, no. 521 (P-1131), 15 novembre 1990 & JP 02 217902 A (MITSUBISHI), 30 août 1990, | 5-7,9-11 | |
| A | * abrégé * | 1-3 | |
| | --- | | |
| A | EP 0 565 155 A (IBM) | 1,4,8 | |
| | --- | | |
| A | US 5 206 566 A (YOSHIDA ET AL.) | 1,4,8 | |
| | --- | | |
| A | PATENT ABSTRACTS OF JAPAN vol. 17, no. 588 (P-1634), 27 octobre 1993 & JP 05 173641 A (MATSUSHITA), 13 juillet 1993, * abrégé * | 1,4,8 | |
| | --- | | DOMAINES TECHNIQUES RECHERCHES (Int.Cl.6) |
| A | PATENT ABSTRACTS OF JAPAN vol. 15, no. 495 (P-1288), 13 décembre 1991 & JP 03 214470 A (TOKICO), 19 septembre 1991, * abrégé * | 1,4,8 | G11B |
| | --- | | |
| A | DE 40 13 009 A (MISUBISHI) | 1,4,8 | |
| | --- | | |
| A | EP 0 312 410 A (TOSHIBA) | 1,4,8 | |
| | ----- | | |

Le présent rapport a été établi pour toutes les revendications

| Lieu de la recherche | Date d'achèvement de la recherche | Examinateur |
|---|---|---|
| LA HAYE | 3 décembre 1997 | Geoghegan, C |